# EUROPEAN PATENT SPECIFICATION

(11) **EP 3 654 673 B1**
(45) Date of publication and mention of the grant of the patent: **04.10.2023**
(21) Application number: 18846137.0
(22) Date of filing: 10.08.2018
(51) Int. Cl.: H04W 4/08, H04W 4/06, H04L 12/18, H04W 76/40

(54) **MULTICAST METHOD AND DEVICE**
MULTICAST-VERFAHREN UND -VORRICHTUNG
PROCÉDÉ ET DISPOSITIF DE MULTIDIFFUSION

(30) Priority: 14.08.2017 CN 201710693534; 02.04.2018 CN 201810283926
(43) Date of publication of application: 20.05.2020
(73) Proprietor: Huawei Technologies Co., Ltd., Longgang District Shenzhen, Guangdong 518129 (CN)
(72) Inventor: ZHU, Hualin, Shenzhen Guangdong 518129 (CN); LI, Huan, Shenzhen Guangdong 518129 (CN); JIN, Weisheng, Shenzhen Guangdong 518129 (CN)
(74) Representative: Pfenning, Meinig & Partner mbB
(86) International application number: PCT/CN2018/100111
(87) International publication number: WO 2019/034005

(56) References cited:
- EP-A1- 2 248 300
- EP-B1- 2 248 300
- CN-A- 101 702 672
- CN-A- 105 897 444
- US-A1- 2004 264 463
- US-A1- 2008 151 911
- US-A1- 2010 111 084
- US-B2- 8 774 180

## Description

### TECHNICAL FIELD

This application relates to the communications field, and in particular, to a multicast method and apparatus.

### BACKGROUND

In a fixed backbone network, to save a transmission bandwidth of the backbone network, data is transmitted in the backbone network by using a multicast technology, and is replicated at a location close to each host joining a multicast group, and then data obtained through replication is distributed to the host.

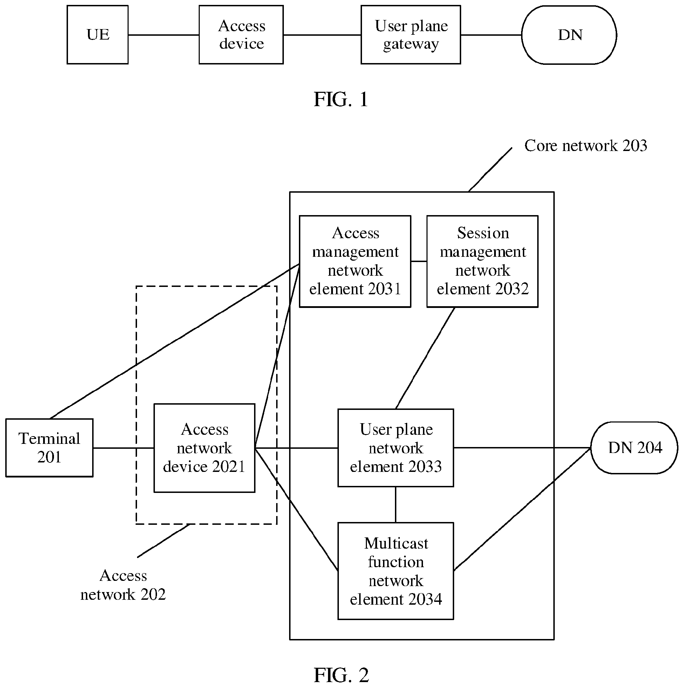

With rapid development of intelligent terminals and mobile applications, a requirement for user equipment (user equipment, UE) to access a data network (data network, DN) via a wireless network is increasingly high. A common user plane architecture of the wireless network is shown in FIG. 1. In the architecture, the UE transmits data with the data network by using an access device and a user plane gateway, and a destination device of a data packet is determined based on the internet protocol (internet protocol, IP) in the data transmission process. However, because the user plane gateway determines the destination UE of the data packet based on the IP, a multicast data packet is discarded by the user plane gateway, causing unavailability of transmission of multicast data in the wireless network.

In US2008/0151911A1, an Internet Group Management Protocol (IGMP) proxy unit is set in an access network (RNC). The IGMP proxy unit is configured to receive multicast data sent from a multicast data source and send the multicast data to a base station which distributes the multicast data to the terminal user. When a multicast is constructed, a terminal sends an IGMP join request message to an IGMP proxy unit. The IGMP proxy unit sends an MGMP join indication message to a SACU in a radio network base station controller. The SACU sends an MGMP join acknowledge message to the IGMP proxy unit. The IGMP proxy unit sends the IGMP join acknowledge message to the terminal. The IGMP proxy unit may include a HPU IGMP proxy unit configured for receiving multicast data sent from a multicast data source and distributing the multicast data to a LPU IGMP proxy unit, and the LPU IGMP proxy unit for receiving a request from a terminal and sending the multicast data to the terminal. When a terminal user requests to join a multicast group, if there is no multicast group in the LPU, the LPU will send an IGMP join request to the HPU, and create a multicast data forwarding table for the multicast group. If the multicast group is in the LPU already, the terminal user is added to the multicast data forwarding table within the LPU, and the LPU does not need to send any IGMP join request to the HPU.

In US8774180B2, the egress router element receives a multicast subscriber JOIN message (710). The egress router element performs a lookup in its IP table to identify the next-hop ingress edge router element toward the multicast source indicated in the JOIN message (720). Then the egress edge router element transmits a JOIN and the RPF-label information to the ingress edge router element through the core network (760). The ingress edge router element receives a multicast data stream from the upstream network element (840). The ingress edge router element can then perform an IP lookup to determine which egress edge router elements are coupled to downstream subscribers. The ingress edge router element then transmit the packets to the next-hop egress edge router element through the next-hop core network router element (870).

In US2004264463A1, when mobile terminal 51 outputs an access request to distribution server 50, multicast gateway apparatus 10 a detects the access request and registers the address H1 of mobile terminal 51 and service information which mobile terminal 51 requests in an access terminal management table which is retained within multicast gateway apparatus 10a. The access terminal management table 19 includes address of receiving terminal which requested access to distribution server, service information which is requested, encapsulation information and time information of when an access request is detected are set. Once receiving a data packet addressed to group G, multicast gateway apparatus 10a retrieves whether there is a terminal to receive the data packet from the mentioned access terminal management table, and as mobile terminal 51 is registered, it sets the destination of the received data packet to address Hl and transfers it to mobile terminal 51.

### SUMMARY

Embodiments of this application provide a multicast method, a device, and a system, to transmit multicast data in a wireless network.

To achieve the foregoing objectives, the following technical solutions according to the claims are provided.

According to a first aspect, a multicast method applied in a wireless network is provided according to claim 1.

According to a second aspect, a multicast apparatus deployed in a user plane network element of a core network in a wireless network is provided according to claim 4.

According to a third aspect, a computer readable storage medium is provided according to claim 6. The computer readable storage medium stores an instruction, and when the instruction runs on a computer, the computer is enabled to perform the method in the first aspect.

Further embodiments of the invention are defined by the dependent claims.

### BRIEF DESCRIPTION OF DRAWINGS

FIG. 1 is a structural diagram of a user plane architecture of a wireless network in the prior art;
FIG. 2 is a schematic architectural diagram of a communications system according to an embodiment of this application;
FIG. 3 is a schematic architectural diagram of another communications system according to an embodiment of this application;
FIG. 4 is a schematic flowchart of a multicast method according to an embodiment of this application;
FIG. 5 is a schematic flowchart of another multicast method according to an embodiment of this application;
FIG. 5a is a schematic flowchart of still another multicast method according to an embodiment of this application;
FIG. 6A and FIG. 6B are a schematic flowchart of still another multicast method according to an embodiment of this application;
FIG. 6a-1 and FIG. 6a-2 are a schematic flowchart of still another multicast method according to an embodiment of this application;

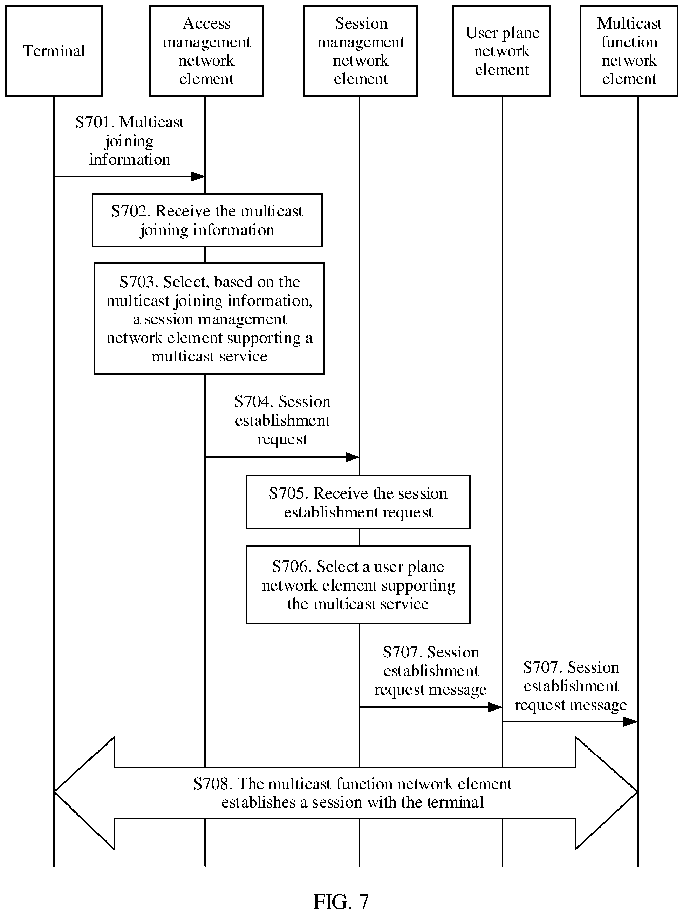

FIG. 7 is a schematic flowchart of yet another multicast method according to an embodiment of this application;

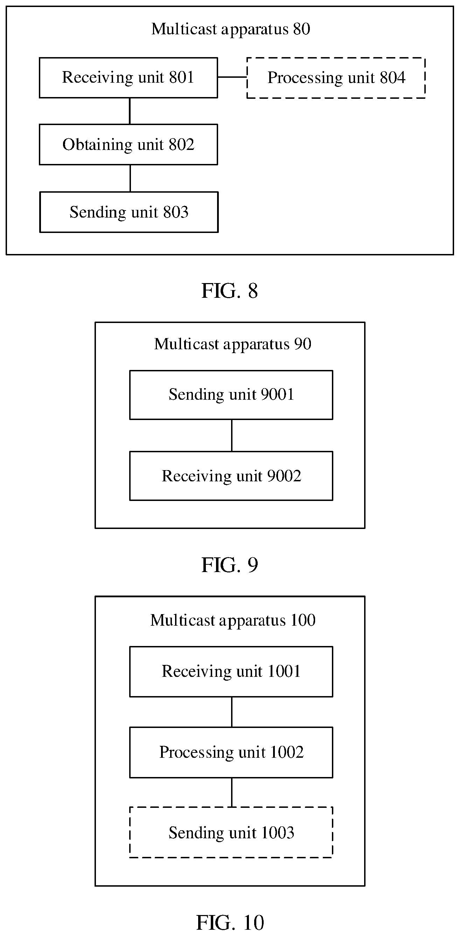

FIG. 8 is a structural diagram of a multicast apparatus according to an embodiment of this application;
FIG. 9 is a structural diagram of another multicast apparatus according to an embodiment of this application;
FIG. 10 is a structural diagram of still another multicast apparatus according to an embodiment of this application; and

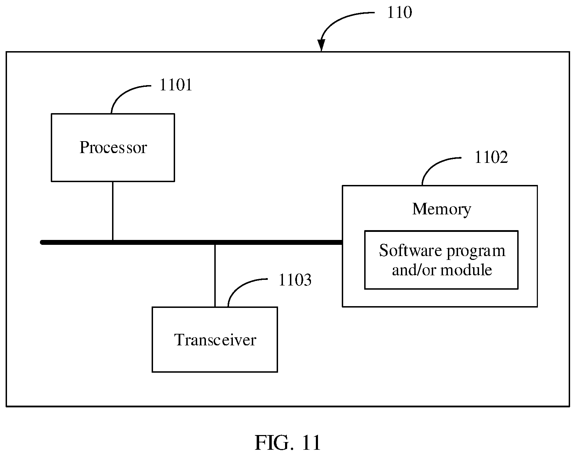

FIG. 11 is a structural diagram of yet another multicast apparatus according to an embodiment of this application.

### DESCRIPTION OF EMBODIMENTS

A multicast method described in this application is applied to a wireless network, namely, a wireless communications system. With development of technologies, the wireless network has different standards. A standard type of the wireless network is not specifically limited in this application. For example, the wireless network to which the multicast method described in this application is applied may be a universal mobile telecommunications system (universal mobile telecommunications system, UMTS), a long term evolution (long term evolution, LTE) system, or a 5th generation mobile communications (the 5th generation mobile communication, 5G) system. Examples are not enumerated one by one herein.

A terminal described in this application is a mobile communications device used by a user. The terminal may be a mobile phone, a tablet computer, a notebook computer, an ultra-mobile personal computer (ultra-mobile personal computer, UMPC), a netbook, a personal digital assistant (personal digital assistant, PDA), an e-book, a mobile television, a wearable device, a personal computer (personal computer, PC), a set top box (Set Top Box, STB), a home television, a car, an unmanned aerial vehicle, or the like. In communications systems of different standards, the terminal may have different names, but all terminals having different names may be understood as the terminal described in this application. A type of the terminal is not specifically limited in the embodiments of this application either.

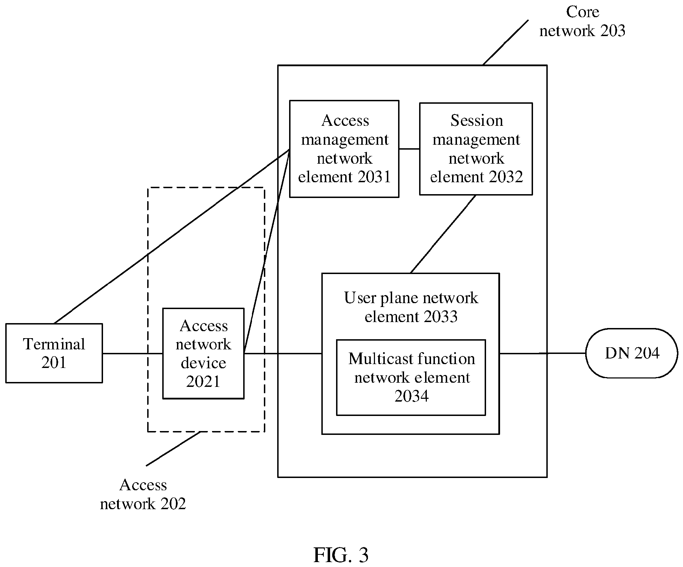

The multicast method provided in the embodiments of this application is applied to a communications network shown in FIG. 2 or a communications network shown in FIG. 3. A difference between FIG. 2 and FIG. 3 lies in different deployment locations of a multicast function network element.

As shown in FIG. 2 or FIG. 3, the communications network includes a terminal 201, an access network 202, a core network 203, and a DN 204. In the communications network, the terminal 201 accesses the DN 204 through the access network 202 and the core network 203.

The access network 202 includes an access network device 2021. The core network 203 includes an access management network element 2031, a session management network element 2032, a user plane network element 2033, and a multicast function network element 2034.

Specifically, the access network device 2021 is responsible for connecting the terminal 201 to the core network 203. The access network device 2021 may be a NodeB (nodeB, NB), an evolved NodeB (evolution nodeB, eNB), or a 5G-AN/5G-RAN node. The 5G-AN/5G-RAN node may be an access node, a next generation NodeB (generation nodeB, gNB), a transmission and reception point (transmission receive point, TRP), a transmission point (transmission point, TP), or another access node. The access management network element 2031 is responsible for access management and mobility management. The session management network element 2032 is responsible for session management. Data may be transmitted between the terminal 201 and the DN 204 by using the access network device 2021 and the user plane network element 2033.

The network elements included in the communications network are connected through predefined interfaces for communication. This is not limited in the embodiments of this application, and details are not described either.

It should be noted that in communications networks of different standards, the access network device 2021, the access management network element 2031, the session management network element 2032, and the user plane network element 2033 may each have different names, and network elements having similar functions all belong to the network elements described in this application. Details are not described herein one by one. The communications network shown in FIG. 2 or FIG. 3 may be an LTE network, a universal mobile telecommunications system (universal mobile telecommunications system, UMTS) network, a 5G network, or another network. A type of a network to which the solutions of this application are applied is not specifically limited in the embodiments of this application.

For example, in the 5G network, the access network device 2021 may be a radio access network (radio access network, RAN) device, the access management network element 2031 may be an access and mobility management function (access and mobility management function, AMF) network element, the session management network element 2032 may be a session management function (session management function, SMF) network element, and the user plane network element 2033 may be a UPF network element.

As shown in FIG. 2, the multicast function network element 2034 may be separately deployed. As shown in FIG. 3, the multicast function network element 2034 may be deployed in combination with the user plane network element 2033, for example, may be integrated into the user plane network element 2033. A deployment manner of the multicast function network element 2034 is not specifically limited in this application.

In the embodiments of this application, the word such as "example" or "for example" is used to represent giving an example, an illustration, or a description. Any embodiment or design scheme described as an "example" or "for example" in the embodiments of this application should not be explained as being more preferred or having more advantages than another embodiment or design scheme. Exactly, use of the word such as "example" or "for example" is intended to present a related concept in a specific manner for ease of understanding.

In the embodiments of this application, that a network element A in the communications network sends content C to a network element B may be that the network element A directly sends the content C to the network element B, or may be that the network element A forwards the content C level by level by using a network element between the network element A and the network element B. This process is not limited or detailed in the embodiments, and is configured based on an actual network architecture in an actual application.

The following describes in detail the embodiments of this application with reference to the accompanying drawings.

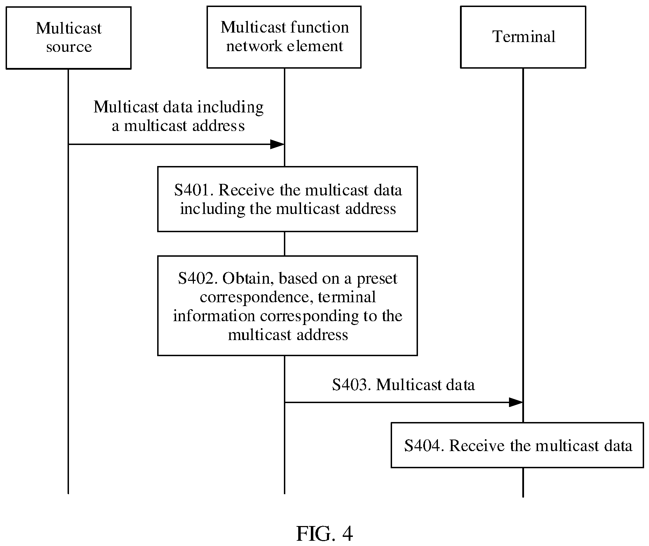

According to an aspect, an embodiment of this application provides a multicast method, applied to the communications network shown in FIG. 2 or FIG. 3. In this embodiment of this application, the multicast method provided in the embodiments of this application is described in detail by using an interaction process between network elements in the communications network. As shown in FIG. 4, the multicast method may include the following steps.

S401. A multicast function network element receives multicast data from a multicast source and that includes a multicast address.

The multicast source is a device that sends the multicast data.

Optionally, the multicast source may be a server or a network node in a DN accessed by a user by using a terminal through the communications network. A type of the multicast source is not specifically limited in this embodiment of this application, and any source device that sends the multicast data in the DN is referred to as the multicast source in this embodiment of this application.

Specifically, the multicast data is sent, based on the multicast address included in the multicast data, to a terminal joining a multicast group indicated by the multicast address.

S402. The multicast function network element obtains, based on a preset correspondence, terminal information corresponding to the multicast address.

The multicast address is an address of a multicast group that a terminal corresponding to the terminal information joins. The terminal information may be one type of information, or may be a plurality of types of information. A type and a form of the terminal information are not specifically limited in this embodiment of this application. For example, the terminal information may include at least one of the following information: address information of the terminal, identifier information of the terminal, and identifier information of a session corresponding to the terminal. Optionally, the terminal information may uniquely correspond to one terminal.

The address information of the terminal is information corresponding to the terminal from an address perspective. For example, the address information of the terminal may be an IP address or an Ethernet address that is allocated to the terminal in the communications network, or other address information.

The identifier information of the terminal is information corresponding to the terminal from an ID perspective. For example, the identifier information of the terminal may be a user identifier (user identifier, UID) allocated to the terminal in a global mobile network, or other identifier information.

The identifier information of the session corresponding to the terminal is information corresponding to the terminal from a perspective of an identifier of the session established for the terminal. For example, the identifier information of the session corresponding to the terminal may be a session ID of the session established for the terminal.

For example, when the address information of the terminal or the identifier information of the terminal may uniquely correspond to one terminal, the address information of the terminal or the identifier information of the terminal may be separately used as the terminal information.

For example, the session ID may be uniquely allocated by a network side to the terminal. In this case, the session ID may uniquely correspond to one terminal, and the identifier information of the session corresponding to the terminal may be separately used as the terminal information.

For example, the session ID may be named by the terminal. In this case, different terminals may have a same session ID, the session ID cannot uniquely correspond to one terminal, and the identifier information of the session corresponding to the terminal needs to be combined with other information to uniquely correspond to one terminal. In this case, the terminal information may be the identifier information of the session corresponding to the terminal and the address information of the terminal; or the terminal information may be the identifier information of the session corresponding to the terminal and the identifier information of the terminal.

Certainly, the foregoing examples describe content of the terminal information in detail only by using examples, and do not constitute a limitation on the terminal information. In an actual application, the content of the terminal information may be configured based on an actual requirement. Any information that can be used to determine the terminal belongs to the terminal information described in this application.

Further, the preset correspondence may include a correspondence between the multicast address and the terminal information. The terminal corresponding to the terminal information joins the multicast group corresponding to the multicast address. From a perspective of transmission of the multicast data, the multicast data including the multicast address should be sent to the terminal corresponding to the terminal information corresponding to the multicast address in the preset correspondence.

The preset correspondence may include one multicast address and terminal information corresponding to the multicast address. For example, the preset correspondence may be represented as {multicast address 1, terminal information A}.

Certainly, the preset correspondence may alternatively include at least one multicast address and terminal information respectively corresponding to the at least one multicast address. An existence form of the preset correspondence is not specifically limited in this embodiment of this application.

For example, as shown in Table 1, content of the preset correspondence is shown in a table form. The preset correspondence includes a plurality of multicast addresses and a plurality of pieces of terminal information respectively corresponding to the multicast addresses.

**Table 1**

| Multicast address | Terminal information |
|---|---|
| Multicast address 1 | Terminal information A |
| Multicast address 2 | Terminal information B |
| Multicast address 3 | Terminal information C |
| ... | ... |

For example, in S401, when the multicast function network element receives multicast data including the multicast address 2, in S402, the multicast function network element may obtain, based on the preset correspondence shown in Table 1, the terminal information B corresponding to the multicast address 2.

For example, one terminal may alternatively join a plurality of multicast groups, and the preset correspondence may include a plurality of multicast addresses corresponding to one piece of terminal information. Details are not described in this embodiment of this application, provided that the preset correspondence reflects the correspondence between the terminal information and the multicast address.

Optionally, the preset correspondence may be established by the multicast function network element, or may be provided by another network element for the multicast function network element. This is not specifically limited in this embodiment of this application. The following separately describes specific implementation of the two solutions.

First solution: The preset correspondence is established by the multicast function network element.

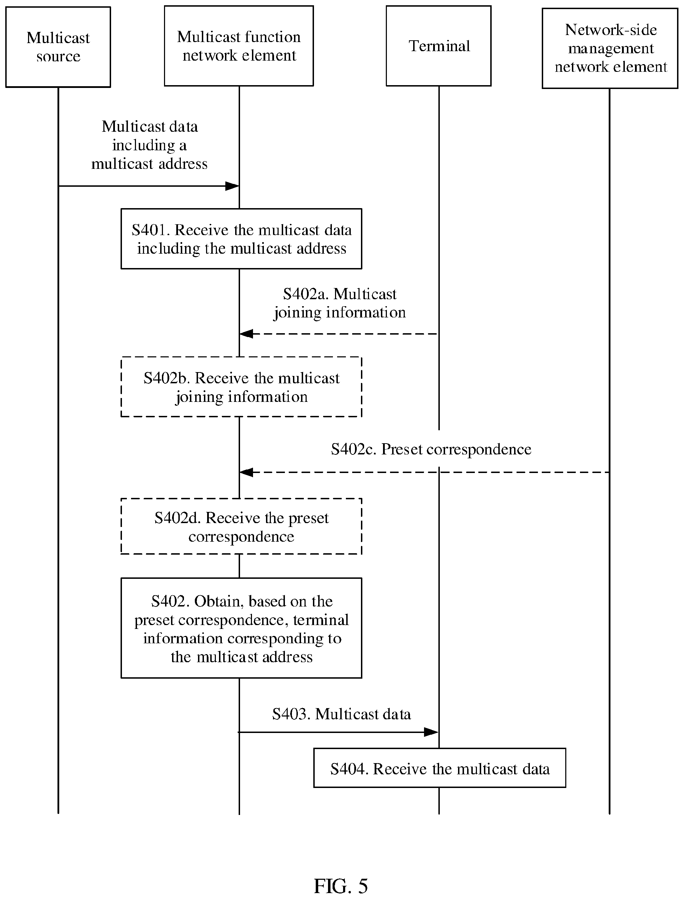

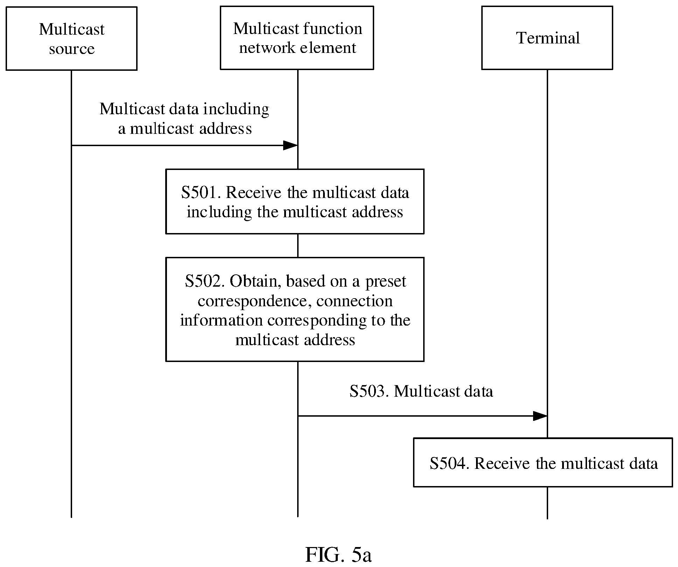

In the first solution, as shown in FIG. 5, before S402, the multicast method provided in this embodiment of this application may further include S402a and S402b.

S402a. The terminal sends multicast joining information to the multicast function network element.

The multicast joining information includes the multicast address, and is used to join the multicast group corresponding to the multicast address. A form and a sending moment of the multicast joining information are not specifically limited in this embodiment of this application.

For example, the multicast joining information may be an existing internet group management protocol (Internet Group Management Protocol, IGMP) message. Certainly, for the multicast joining information, a message may alternatively be newly deployed to be specially used to send the multicast joining information.

Specifically, a specific implementation of S402a is different based on the moment at which the terminal sends the multicast joining information, and may include but is not limited to the following two implementations:
Implementation 1: The terminal sends the multicast joining information to the multicast function network element from a user plane.

In Implementation 1, after the session is established, the terminal communicates with a user plane network element on the user plane, to transmit user plane data and signaling.

Optionally, in Implementation 1, if the multicast function network element is deployed inside the user plane network element, that the terminal sends the multicast joining information to the multicast function network element from a user plane is specifically implemented as: The terminal sends the multicast joining information to an access network device; the access network device sends the multicast joining information to the user plane network element; and the multicast function network element in the user plane network element receives the multicast joining information from the terminal.

Optionally, in Implementation 1, if the multicast function network element is separately deployed, that the terminal sends the multicast joining information to the multicast function network element from a user plane is specifically implemented as: The terminal sends the multicast joining information to an access network device; the access network device sends the multicast joining information to the user plane network element; and the user plane network element further sends the multicast joining information to the multicast function network element.

It should be noted that, in a process in which the terminal sends the multicast joining information to the multicast function network element from the user plane, a transmission path of the multicast joining information depends on architecture deployment of the communications network. Details are not described in this embodiment of this application. In different communications network architectures, the terminal sends the multicast joining information to the multicast function network element through level-by-level forwarding of a network element between the terminal and the multicast function network element. Briefly, the terminal sends the multicast joining information to the multicast function network element. In subsequent embodiments, similar descriptions are provided for a case in which specific content is transmitted between two network elements in the communications network, and detailed processes are not described one by one.

Implementation 2: The terminal sends the multicast joining information to the multicast function network element from a control plane.

In Implementation 2, in a registration process before the session is established, or in a session establishment process, the terminal sends the multicast joining information to the multicast function network element through level-by-level forwarding of a network-side management network element on the control plane between the terminal and the multicast function network element.

The network-side management network element may include an access management network element, a session management network element, or the like.

S402b. The multicast function network element receives the multicast joining information from the terminal.

Specifically, corresponding to the two implementations of sending the multicast joining information to the multicast function network element by the terminal in S402a, in S402b, a specific implementation of receiving, by the multicast function network element, the multicast joining information from the terminal also includes the following two implementations:
Implementation A: The multicast function network element receives, from the user plane, the multicast joining information from the terminal.
Implementation B: The multicast function network element receives, from the control plane, the multicast joining information from the terminal.

It should be noted that Implementation A and Implementation B in S402b correspond to Implementation 1 and Implementation 2 in S402a. Specific implementations of Implementation A and Implementation B are the same as those of Implementation 1 and Implementation 2. Details are not described herein again.

In S402b, the multicast function network element can obtain the multicast address of the multicast group that the terminal joins, namely, the multicast address included in the multicast joining information. In this way, the multicast function network element associates the multicast address of the multicast group that the terminal joins with the terminal information of the terminal into the content of the preset correspondence.

Further, optionally, when establishing the preset correspondence, the multicast function network element may obtain the terminal information of the terminal in a process of establishing the session with the terminal, or the terminal information of the terminal may be from the terminal to the multicast function network element when the terminal registers with the network. Alternatively, the multicast function network element may obtain the terminal information of the terminal in another manner. This is not specifically limited in this embodiment of this application.

Further, optionally, if the multicast function network element obtains the terminal information in the process of establishing the session with the terminal, before S402, the multicast method provided in this embodiment of this application may further include: establishing, by the multicast function network element, the session with the terminal.

For example, a session establishment request from the terminal may include the address information of the terminal or the identifier information of the terminal. When the terminal information is the address information of the terminal or the identifier information of the terminal, the multicast function network element can obtain the terminal information by using the received session establishment request.

For example, when the terminal information is the address information of the terminal, the session management network element allocates an address to the terminal when the multicast function network element establishes the session with the terminal. In this case, the terminal information can be obtained.

For example, when the terminal information is the identifier information of the session corresponding to the terminal, the session management network element allocates the identifier information to the session when the multicast function network element establishes the session with the terminal. In this case, the terminal information can be obtained.

Second solution: The preset correspondence is provided by another network element for the multicast function network element.

In the second solution, the another network element in the communications network constructs the preset correspondence, and sends the preset correspondence to the multicast function network element. Therefore, as shown in FIG. 5, before S402, the multicast method provided in this application may further include S402c and S402d.

S402c. A network-side management network element sends the preset correspondence to the multicast function network element.

The network-side management network element may be an access management network element or a session management network element.

For example, the access management network element or the session management network element constructs the preset correspondence, and sends the preset correspondence to the multicast function network element.

Optionally, the network-side management network element may obtain, in a process of establishing the session for the terminal, the terminal information and the multicast address of the multicast group that the terminal joins, and construct the preset correspondence.

For example, a session establishment request from the terminal may include the address information of the terminal or the identifier information of the terminal. When the terminal information is the address information of the terminal or the identifier information of the terminal, the network-side management network element can obtain the terminal information by using the received session establishment request.

For example, when the terminal information is the address information of the terminal, the session management network element allocates an address to the terminal during session establishment.

For example, when the terminal information is the identifier information of the session corresponding to the terminal, the session management network element allocates the identifier information to the session during session establishment. In this case, the terminal information can be obtained.

S402d. The multicast function network element receives the preset correspondence from the network-side management network element.

It should be noted that the first solution and the second solution are parallel solutions, and only one solution needs to be selected and executed in an actual application.

S403. The multicast function network element sends the multicast data to the terminal corresponding to the terminal information.

Specifically, after obtaining the terminal information corresponding to the multicast address in S402, the multicast function network element learns of a destination terminal of the multicast data received in S401, and performs S403 to send the multicast data to the destination terminal.

In a possible implementation, S403 may be specifically implemented as: sending, by the multicast function network element, the multicast data to the terminal through the session corresponding to the terminal information.

In a possible implementation, S403 may be specifically implemented as: modifying, by the multicast function network element, a destination address of the multicast data to an address of the terminal corresponding to the terminal information; and sending, by the multicast function network element to the terminal, the multicast data whose destination address has been modified.

S404. The terminal receives the multicast data from the multicast function network element.

According to the multicast method provided in this application, when receiving the multicast data, the multicast function network element obtains, based on the preset correspondence, the terminal information corresponding to the multicast address of the multicast data, and can send, based on the terminal information, the multicast data to the terminal corresponding to the terminal information, thereby transmitting the multicast data in a wireless network.

According to another aspect, an embodiment of this application provides another multicast method, applied to the communications network shown in FIG. 2 or FIG. 3. In this embodiment of this application, the multicast method provided in the embodiments of this application is described in detail by using an interaction process between network elements in the communications network. As shown in FIG. 5a, the multicast method may include the following steps.

S501. A multicast function network element receives multicast data from a multicast source and that includes a multicast address.

It should be noted that a specific implementation of S501 is the same as that of S401, and details are not described herein again.

S502. The multicast function network element obtains, based on a preset correspondence, connection information corresponding to the multicast address.

A connection is a link for data transmission between a terminal and a DN, and the connection information is information used to indicate the link. Specific content of the connection information may be defined based on an actual requirement. This is not specifically limited in this application. In a possible implementation, one piece of connection information may uniquely correspond to one terminal. Therefore, the connection information of the terminal is defined as connection information of a connection to which the terminal belongs.

A connection device is deployed on a connection between the multicast function network element and the terminal, and the multicast function network element sends the multicast data to the terminal on the connection by using the connection device. The multicast address is an address of a multicast group that the terminal corresponding to connection information joins. The connection information may be one type of information, or may be a plurality of types of information. A type and a form of the connection information are not specifically limited in this embodiment of this application. For example, the connection information includes at least one of the following information: address information of the connection device on the connection corresponding to the connection information, identifier information of the connection device, and identifier information of the connection. In a possible implementation, the connection information may uniquely correspond to one connection, and the connection is used to transmit the multicast data between the terminal and the DN.

The address information of the connection device is information corresponding to the connection from an address perspective. For example, the address information of the connection device may be an IP address or an Ethernet address that is allocated to the connection device in the communications network, or other address information.

The identifier information of the connection device is information corresponding to the connection from an ID perspective. For example, the identifier information of the connection may be an identification symbol allocated to the connection device in the network.

For example, the connection information may be N3 tunnel information (Tunnel information). For example, the connection device may be a tunnel endpoint device such as an NG-RAN device or a UPF network element. This is not specifically limited in this application.

Certainly, the foregoing examples describe content of the connection information in detail only by using examples, and do not constitute a limitation on the connection information. In an actual application, the content of the connection information may be configured based on an actual requirement. Any information that can be used to determine the connection belongs to the connection information described in this application.

Further, the preset correspondence may include a correspondence between the multicast address and the connection information. The terminal accessing the connection corresponding to the connection information joins the multicast group corresponding to the multicast address. From a perspective of transmission of the multicast data, the multicast data including the multicast address should be sent to the terminal accessing the connection corresponding to the connection information corresponding to the multicast address in the preset correspondence.

The preset correspondence may include one multicast address and connection information corresponding to the multicast address. For example, the preset correspondence may be represented as {multicast address 1, connection information A}.

Certainly, the preset correspondence may alternatively include at least one multicast address and connection information respectively corresponding to the at least one multicast address. An existence form of the preset correspondence is not specifically limited in this embodiment of this application.

For example, as shown in Table 2, content of the preset correspondence is shown in a table form. The preset correspondence includes a plurality of multicast addresses and a plurality of pieces of connection information respectively corresponding to the multicast addresses.

**Table 2**

| Multicast address | Connection information |
|---|---|
| Multicast address 4 | Connection information E |
| Multicast address 5 | Connection information F |
| Multicast address 6 | Connection information G |
| ... | ... |

For example, in S501, when the multicast function network element receives multicast data including the multicast address 5, in S502, the multicast function network element may obtain, based on the preset correspondence shown in Table 2, the connection information F corresponding to the multicast address 5.

Optionally, the preset correspondence may be established by the multicast function network element, or may be provided by another network element for the multicast function network element. This is not specifically limited in this embodiment of this application. For a specific implementation thereof, refer to the first solution and the second solution that are described in S402, and a difference is that the preset correspondence in S402 includes the terminal information, and the preset correspondence in S502 herein includes the connection information of the terminal.

S503. The multicast function network element sends the multicast data to the terminal through the connection corresponding to the connection information.

Specifically, after obtaining the connection information corresponding to the multicast address in S502, the multicast function network element learns of the connection for transmitting the multicast data received in S501, and performs S503 to send the multicast data to the terminal accessing the connection.

In a possible implementation, S503 may be specifically implemented as: sending, by the multicast function network element, the multicast data to the terminal through the connection corresponding to the connection information.

In a possible implementation, S503 may be specifically implemented as: modifying, by the multicast function network element, a destination address of the multicast data to an address of the terminal accessing the connection corresponding to the connection information; and sending, by the multicast function network element to the terminal through the connection corresponding to the connection information, the multicast data whose destination address has been modified.

S504. The terminal receives the multicast data from the multicast function network element.

According to the multicast method provided in this application, when receiving the multicast data, the multicast function network element obtains, based on the preset correspondence, the connection information corresponding to the multicast address of the multicast data, and can send, based on the connection information, the multicast data to the terminal accessing the connection corresponding to the connection information, thereby transmitting the multicast data in a wireless network.

According to another aspect, an embodiment of this application provides another multicast method, applied to the communications network shown in FIG. 2 or FIG. 3. In this embodiment of this application, the multicast method provided in this application is described in detail by using an interaction process between network elements in the communications network. Different from the previous embodiment, this embodiment further describes, on the basis of the transmission process of multicast data that is described in the previous embodiment, a process of establishing a session for a terminal.

As shown in FIG. 6A and FIG. 6B or FIG. 6a-1 and FIG. 6a-2, the multicast method provided in this embodiment of this application may include the following steps.

S601. The terminal sends multicast indication information to an access management network element.

The multicast indication information is used to establish a session used for a multicast service.

Optionally, in S601, that a terminal sends multicast indication information to an access management network element may include but is not limited to the following two implementations:
First implementation: The terminal sends a session establishment request to the access management network element, where the session establishment request includes the multicast indication information.

Optionally, in the first implementation, the session establishment request may include address information of the terminal or identifier information of the terminal, and is used to obtain terminal information of the terminal.

Optionally, in the first implementation, the session establishment request may include connection information of a connection accessed by the terminal, and is used to obtain the connection information of the terminal.

Second implementation: The terminal sends a registration request to the access management network element, where the registration request includes the multicast indication information.

Further, content of the multicast indication information may be configured based on an actual requirement. This is not specifically limited in this embodiment of this application.

Optionally, the multicast indication information may include a data network name or a multicast indication.

The data network name or the multicast indication may be preconfigured as the multicast indication information. When the terminal sends the data network name or the multicast indication, the terminal sends the multicast indication information. The data network name may be a name of a data network having a multicast function. The multicast indication may be functional code, or may be a dedicated character or character string. This is not specifically limited in this embodiment of this application. The data network name and the multicast indication may be configured based on an actual requirement, provided that the data network name and the multicast indication can be identified as the multicast indication information by both the terminal and a network element on a network side.

S602. The access management network element receives the multicast indication information from the terminal.

The access management network element may receive, by using an access network device, the multicast indication information from the terminal.

It should be noted that, corresponding to the two implementations of sending the multicast indication information by the terminal in S601, there may also be two implementations of receiving the multicast indication information by the access management network element in S602. The two implementations include: receiving the session establishment request including the multicast indication information, or receiving the registration request including the multicast indication information. Details are not described herein again.

S603. The access management network element selects, based on the multicast indication information, a session management network element supporting the multicast service.

Specifically, the multicast indication information is used to instruct to establish the session used for the multicast service. Therefore, when receiving the multicast indication information, the access management network element selects the session management network element supporting the multicast service, so that the established session supports the multicast service.

For example, whether the session management network element supports the multicast service may be reflected by using a preset field in an interactive message. In an initial phase of network establishment, the access management network element obtains whether each session management network element supports the multicast service. Alternatively, the access management network element may send a request message to a session management network element connected to the access management network element, to request to obtain whether the session management network element supports the multicast service; and select, by using response content of the session management network element, the session management network element supporting the multicast service. An implementation of identifying whether the session management network element supports the multicast service is not specifically limited in this embodiment of this application.

It should be noted that, if the second implementation is used in S601, that is, the terminal sends the registration request to the access management network element, where the registration request includes the multicast indication information, after S603 and before S604, the multicast method provided in this embodiment of this application further includes: sending, by the terminal, a session establishment request to the access management network element. This step is not shown in FIG. 6A and FIG. 6B or FIG. 6a-1 and FIG. 6a-2. Optionally, the session establishment request may include the address information of the terminal or the identifier information of the terminal that is used as the terminal information of the terminal in the preset correspondence. Optionally, the session establishment request may include the connection information of the terminal that is used in the preset correspondence.

S604. The access management network element sends, to the session management network element supporting the multicast service, the session establishment request including the multicast indication information.

Optionally, the session establishment request from the access management network element in S604 may further include the address information of the terminal or the identifier information of the terminal, and is used to obtain the terminal information of the terminal.

Optionally, the session establishment request from the access management network element in S604 may further include the connection information of the terminal.

S605. The session management network element receives the session establishment request including the multicast indication information.

It should be noted that the session management network element in S605 is the session management network element that supports the multicast service and that is selected by the access management network element in S603. The session establishment request received by the session management network element in S605 is the session establishment request from the access management network element in S604.

Specifically, based on an architecture of the communications network, the multicast indication information that is received by the session management network element from the terminal in S605 is the multicast indication information in the session establishment request , in S604, by the access management network element to the session management network element supporting the multicast service. The multicast indication information is forwarded by the access management network element to the session management network element after being from the terminal to the access management network element. Therefore, this may be briefly described as: the session management network element receives the multicast indication information from the terminal; or may be briefly described as: the session management network element receives the multicast indication information from the access management network element.

S606. The session management network element selects, based on the multicast indication information, a user plane network element supporting the multicast service.

Specifically, the multicast indication information is used to instruct to establish the session used for the multicast service. Therefore, when receiving the multicast indication information, the session management network element selects the user plane network element supporting the multicast service, so that the established session supports the multicast service.

For example, the user plane network element supporting the multicast service is a user plane network element in which a multicast function network element is deployed, or a user plane network element that cooperates with an independently deployed multicast function network element.

For example, whether the user plane network element supports the multicast service may be reflected by using a preset field in an interactive message. In the initial phase of network establishment, the session management network element obtains whether the user plane network element supports the multicast service. Alternatively, the session management network element may send a request message to a user plane network element connected to the session management network element, to request to obtain whether the user plane network element supports the multicast service; and select, by using response content of the user plane network element, the user plane network element supporting the multicast service. An implementation of identifying whether the user plane network element supports the multicast service is not specifically limited in this embodiment of this application.

S607. The session management network element sends a session establishment request message to the multicast function network element by using the user plane network element supporting the multicast service.

In a possible implementation, the session establishment request message from the session management network element in S607 may not include the multicast indication information.

In a possible implementation, the session establishment request message from the session management network element in S607 may alternatively include the multicast indication information, to instruct to perform the multicast service through the session established this time, so that the user plane network element or the multicast function network element enables a multicast function. In this way, the user plane network element or the multicast function network element only needs to determine whether a specific session is used to transmit multicast data, thereby improving data transmission efficiency.

Optionally, the session establishment request from the session management network element in S607 may further include the address information of the terminal or the identifier information of the terminal, and is used to obtain the terminal information of the terminal.

Optionally, the session establishment request from the session management network element in S607 may further include the connection information of the terminal.

It should be noted that if the multicast function network element is deployed inside the user plane network element, in S607, when the session management network element sends the session establishment request to the user plane network element supporting the multicast service, the multicast function network element receives the session establishment request. If the multicast function network element is separately deployed, S607 is specifically implemented as: The session management network element sends the session establishment request to the user plane network element, and the user plane network element sends the session establishment request to the multicast function network element.

It should be noted that FIG. 6A and FIG. 6B or FIG. 6a-1 and FIG. 6a-2 show only the case in which the multicast function network element is separately deployed, but does not constitute a limitation on the case in which the multicast function network element is deployed inside the user plane network element.

S608. The multicast function network element establishes the session with the terminal.

The session established in S608 is the session that the multicast indication information is used to instruct to establish and that is used for the multicast service. In a process of S608, the multicast function network element may obtain the terminal information or the connection information of the terminal.

Specifically, if the terminal information is the address information of the terminal, in a session establishment process, the session management network element allocates an address to the terminal, and sends the allocated address information to the user plane network element and the terminal. If the terminal information is the identifier information of the terminal or the address information of the terminal, the session establishment request from the terminal includes the identifier information of the terminal or the address information of the terminal. If the terminal information is a session ID corresponding to the terminal, in a session establishment process, the session management network element allocates the session ID to the established session, and sends the allocated session ID to the user plane network element.

Specifically, if the connection information is address information of a connection device, in a session establishment process, the session management network element allocates an address to the connection device on the connection accessed by the terminal, and sends the allocated address information to the user plane network element and the terminal. If the connection information is identifier information of a connection device or address information of a connection device, the session establishment request from the terminal includes the identifier information or the address information of the connection device on the connection accessed by the terminal. If the connection information is identifier information of the connection, in a session establishment process, the session management network element allocates a session ID to the established session, and sends the allocated session ID to the user plane network element.

Specifically, in S608, a control plane network element (for example, the session management network element or the access management network element) between the multicast function network element and the terminal establishes the session between the multicast function network element and the terminal through message exchange. The process is the same as an existing session establishment process, and details are not described herein.

After the session is established, the terminal enters a data transmission phase, and performs S609 to join a multicast group.

S609. The terminal sends multicast joining information to the multicast function network element.

The multicast joining information includes the multicast address, and is used by the terminal to join a multicast group corresponding to the multicast address.

S610. The multicast function network element receives the multicast joining information from the terminal.

Specifically, in S610, the multicast function network element receives the multicast joining information from a user plane, to obtain the multicast address, and associates the multicast address with the terminal information or the connection information of the terminal that is obtained in S608, to form a preset correspondence. The formation of the preset correspondence has been described in detail in the previous embodiment, and details are not described herein again. The preset correspondence also has been described in detail in the previous embodiment, and details are not described herein again.

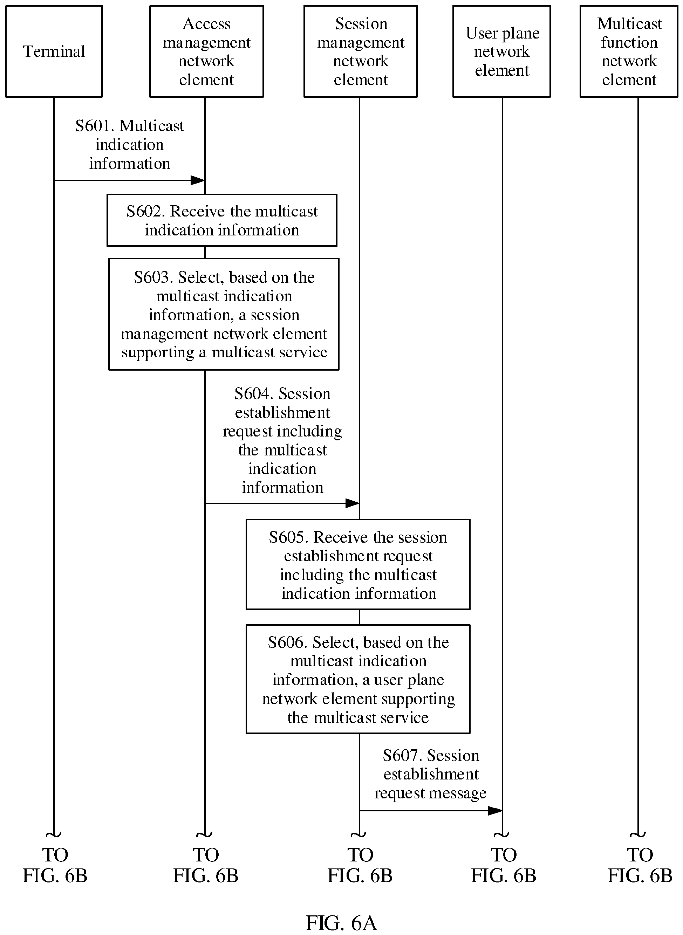

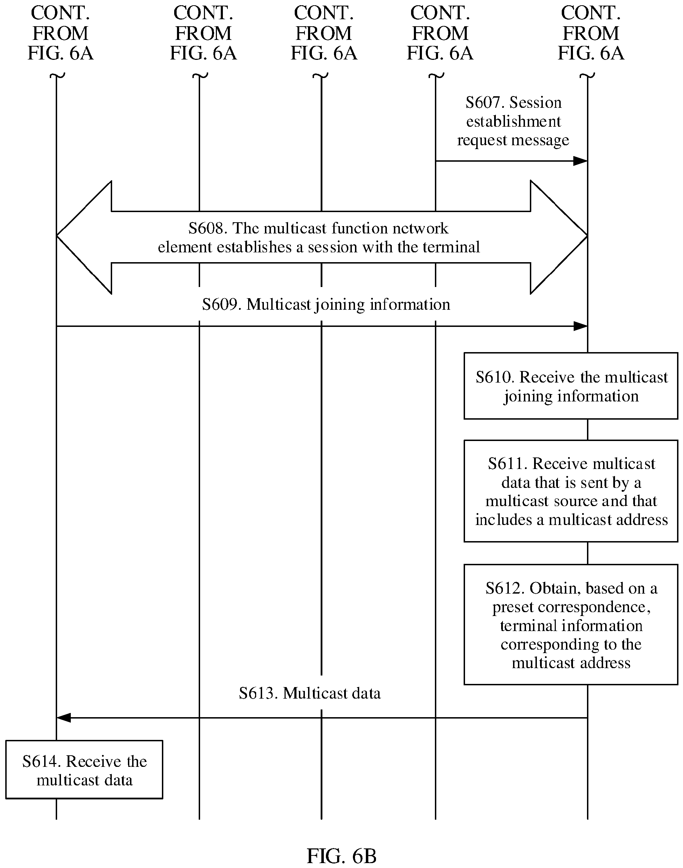

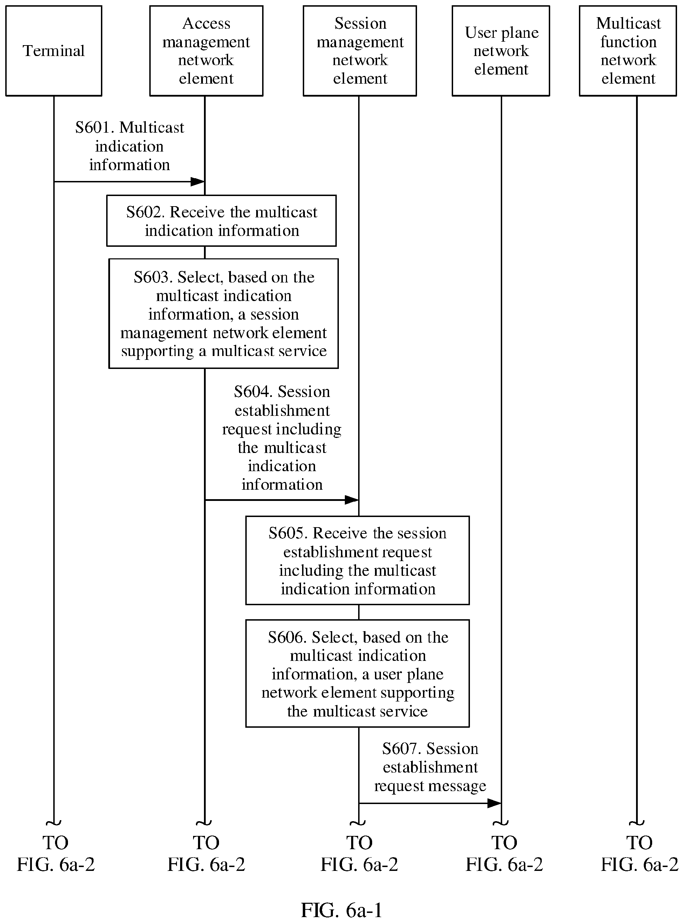

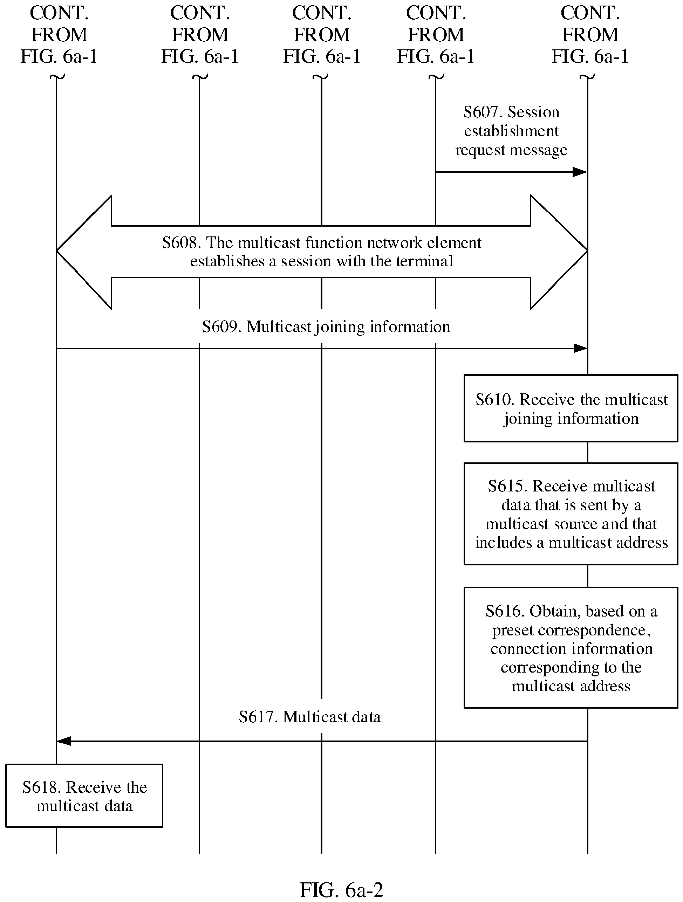

Further, optionally, as shown in FIG. 6A and FIG. 6B, after S610, S611 to S614 are performed to transmit the multicast data between the multicast function network element and the terminal.

S611. The multicast function network element receives the multicast data from a multicast source and that includes the multicast address.

S612. The multicast function network element obtains, based on the preset correspondence, the terminal information corresponding to the multicast address.

S613. The multicast function network element sends the multicast data to the terminal corresponding to the terminal information.

It should be noted that processes of S611 to S613 are the same as of the processes described in S401 to S403, and details are not described herein again.

S614. The terminal receives the multicast data from the multicast function network element.

In S614, the terminal receives the multicast data from the multicast function network element through the session used for the multicast service. Optionally, a destination address of the multicast data received by the terminal may be the address of the terminal.

Further, optionally, as shown in FIG. 6a-1 and FIG. 6a-2, after S610, S615 to S618 are performed to transmit the multicast data between the multicast function network element and the terminal.

S615. The multicast function network element receives the multicast data from a multicast source and that includes the multicast address.

S616. The multicast function network element obtains, based on the preset correspondence, the connection information corresponding to the multicast address.

S617. The multicast function network element sends the multicast data to the terminal through the connection corresponding to the connection information.

It should be noted that processes of S615 to S617 are the same as the processes described in S501 to S503, and details are not described herein again.

S618. The terminal receives the multicast data from the multicast function network element.

In S618, the terminal receives the multicast data from the multicast function network element through the session used for the multicast service. Optionally, a destination address of the multicast data received by the terminal may be the address of the terminal.

According to still another aspect, an embodiment of this application provides yet another multicast method, applied to the communications network shown in FIG. 2 or FIG. 3. In this embodiment of this application, the multicast method provided in this application is described in detail by using an interaction process between network elements in the communications network. The same as the previous embodiment, this embodiment further describes, on the basis of the transmission process of multicast data, a process of establishing a session for a terminal. A difference from the previous embodiment is that multicast indication information in this embodiment is multicast joining information.

As shown in FIG. 7, the multicast method provided in this embodiment of this application may include the following steps.

S701. The terminal sends the multicast joining information to an access management network element.

A multicast indication is used to establish a session used for a multicast service. In S701, the multicast joining information includes a multicast address of a multicast group that the terminal is to join.

Optionally, in S701, the sending, by the terminal, the multicast joining information to an access management network element may be implemented as: sending, by the terminal, a session establishment request including the multicast joining information to the access management network element; or sending, by the terminal, a registration request including the multicast joining information to the access management network element.

Optionally, in S701, if the sending, by the terminal, the multicast joining information to an access management network element is implemented as the sending, by the terminal, a session establishment request including the multicast joining information to the access management network element, the session establishment request may include address information of the terminal or identifier information of the terminal, and is used to obtain terminal information of the terminal.

Optionally, in S701, if the sending, by the terminal, the multicast joining information to an access management network element is implemented as the sending, by the terminal, a session establishment request including the multicast joining information to the access management network element, the session establishment request may include connection information of the terminal.

It should be noted that, a specific implementation of sending the multicast joining information to the access management network element by the terminal in S701 is the same as the specific implementation of sending the multicast indication information to the access management network element by the terminal in S601, but sent content is different. Therefore, for the specific implementation of S701, refer to the specific implementation of S601, and details are not described herein again.

S702. The access management network element receives the multicast joining information from the terminal.

It should be noted that a specific implementation of receiving, by the access management network element, the multicast joining information from the terminal in S702 is the same as the specific implementation of receiving, by the access management network element, the multicast indication information from the terminal in S602, but received content is different. Therefore, for the specific implementation of S702, refer to the specific implementation of S602, and details are not described herein again.

S703. The access management network element selects, based on the multicast joining information, a session management network element supporting a multicast service.

It should be noted that, the multicast joining information in S703 is used as multicast indication information, and a function of the multicast joining information is the same as a function of the multicast indication information in S603. A specific implementation of selecting, by the access management network element based on the multicast joining information, the session management network element supporting the multicast service in S703 is the same as the specific implementation of selecting, by the access management network element based on the multicast indication information, the session management network element supporting the multicast service in S603, but referenced content is different. Therefore, for the specific implementation of S703, refer to the specific implementation of S603, and details are not described herein again.

It should be noted that, in S701, if the terminal sends a registration request including the multicast joining information to the access management network element, after S703 and before S704, the multicast method provided in this embodiment of this application further includes: sending, by the terminal, a session establishment request to the access management network element. This step is not shown in FIG. 7. Optionally, the session establishment request may include the address information of the terminal or the identifier information of the terminal that is used as the terminal information of the terminal in a preset correspondence. Optionally, the session establishment request may include address information or identifier information that is of a connection device on a connection accessed by the terminal and that is used as the connection information of the terminal in a preset correspondence.

S704. The access management network element sends a session establishment request to the session management network element supporting the multicast service.

Optionally, in S704, the access management network element may send the session establishment request including the multicast joining information to the session management network element supporting the multicast service, and the session establishment request is used to instruct the session management network element to establish the session used for the multicast service.

Optionally, the session establishment request from the access management network element in S704 may further include the address information of the terminal or the identifier information of the terminal, and is used to obtain the terminal information of the terminal. Optionally, the session establishment request from the access management network element in S704 may further include the address information or the identifier information of the connection device on the connection accessed by the terminal, and is used to obtain the connection information of the terminal.

Optionally, in S704, the access management network element may obtain, as the terminal information, the address information or the identifier information of the terminal that is included in the session establishment request from the terminal, and associate the terminal information of the terminal with the multicast address included in the multicast joining information into the preset correspondence. On the basis of sending the session establishment request to the session management network element supporting the multicast service, the access management network element may further send the preset correspondence to the session management network element supporting the multicast service. Optionally, the preset correspondence may be included in the session establishment request for sending, or the preset correspondence may be from using an independent message. This is not specifically limited in this embodiment of this application.

Optionally, in S704, the access management network element may obtain, as the connection information of the terminal, the address information or the identifier information of the connection device on the connection accessed by the terminal that is included in the session establishment request from the terminal, and associate the connection information of the terminal with the multicast address included in the multicast joining information into the preset correspondence. On the basis of sending the session establishment request to the session management network element supporting the multicast service, the access management network element may further send the preset correspondence to the session management network element supporting the multicast service. Optionally, the preset correspondence may be included in the session establishment request for sending, or the preset correspondence may be from using an independent message. This is not specifically limited in this embodiment of this application.

Optionally, in S704, if the access management network element further sends the preset correspondence while sending the session establishment request to the session management network element supporting the multicast service, the preset correspondence may be used to instruct the session management network element to establish the session used for the multicast service.

S705. The session management network element receives the session establishment request from the access management network element.

In a possible implementation, in S704, on the basis of sending the session establishment request including the multicast joining information to the session management network element supporting the multicast service, if the access management network element further sends the preset correspondence to the session management network element supporting the multicast service, in S705, the session management network element receives the preset correspondence.

In a possible implementation, in S704, if the access management network element sends the session establishment request including the multicast joining information to the session management network element supporting the multicast service, but does not send the preset correspondence, and the session establishment request includes the address information of the terminal or the identifier information of the terminal, in S705, the session management network element may obtain, as the terminal information of the terminal, the address information of the terminal or the identifier information of the terminal that is included in the session establishment request, and associate the terminal information of the terminal with the multicast address in the multicast joining information included in the session establishment request into the preset correspondence.

In a possible implementation, in S704, if the access management network element sends the session establishment request including the multicast joining information to the session management network element supporting the multicast service, but does not send the preset correspondence, and the session establishment request includes the address information or the identifier information of the connection device on the connection accessed by the terminal, in S705, the session management network element may obtain, as the connection information of the terminal, the address information or the identifier information of the connection device on the connection accessed by the terminal that is included in the session establishment request, and associate the connection information of the terminal with the multicast address in the multicast joining information included in the session establishment request into the preset correspondence.

S706. The session management network element selects a user plane network element supporting the multicast service.

Optionally, the session management network element may determine, based on the multicast joining information included in the session establishment request received in S705, to establish the session used for the multicast service, and select, in S706, the user plane network element supporting the multicast service, so that the established session supports the multicast service.

Optionally, the session management network element may determine, based on the preset correspondence received in S705, to establish the session used for the multicast service, and select, in S706, the user plane network element supporting the multicast service, so that the established session supports the multicast service.

S707. The session management network element sends a session establishment request message to a multicast function network element by using the user plane network element supporting the multicast service.

In S707, the session establishment request message from the session management network element to the multicast function network element by using the user plane network element supporting the multicast service may include the multicast joining information, or may include the multicast joining information and the address information of the terminal, or may include the multicast joining information and the identifier information of the terminal. This is not specifically limited in this embodiment of this application.

Optionally, in S707, the session management network element may send the session establishment request message to the multicast function network element by using the user plane network element supporting the multicast service, where the session establishment request message includes the multicast joining information, and the multicast joining information is used by the multicast function network element to establish the preset correspondence.

Optionally, in S707, the session management network element may send the session establishment request message to the multicast function network element by using the user plane network element supporting the multicast service, where the session establishment request message includes the multicast joining information and the address information or the identifier information of the terminal, and the multicast joining information is used by the multicast function network element to establish the preset correspondence.

Optionally, in S707, on the basis of sending the session establishment request to the multicast function network element by using the user plane network element supporting the multicast service, the session management network element may further send the preset correspondence to the multicast function network element by using the user plane network element supporting the multicast service. The preset correspondence may be established by the session management network element in S705, or may be received by the session management network element from the access management network element in S705.

In a possible implementation, in S707, the session management network element sends the preset correspondence or the session establishment request message including the multicast joining information, to instruct to perform the multicast service through the session established this time, so that the user plane network element or the multicast function network element enables a multicast function. In this way, the user plane network element or the multicast function network element only needs to determine whether a specific session is used to transmit multicast data, thereby improving data transmission efficiency.

It should be noted that FIG. 7 shows only a case in which the multicast function network element is separately deployed, but does not constitute a limitation on a case in which the multicast function network element is deployed inside the user plane network element.

S708. The multicast function network element establishes the session with the terminal.

The session established in S708 is the session that the multicast indication information is used to instruct to establish and that is used for the multicast service.

Optionally, in S707, if the session management network element sends the session establishment request message including the multicast joining information to the multicast function network element by using the user plane network element supporting the multicast service, in S708, the multicast function network element may further obtain, as the terminal information of the terminal, the address information allocated to the terminal in a session establishment process or a session identifier of the established session, and associate the terminal information of the terminal with the multicast address in the multicast joining information into the preset correspondence.

Optionally, in S707, if the session management network element sends the session establishment request message including the multicast joining information to the multicast function network element by using the user plane network element supporting the multicast service, and the session establishment request further includes the address information or the identifier information of the terminal, in S708, the multicast function network element may further obtain, as the terminal information of the terminal, the address information or the identifier information of the terminal that is included in the session establishment request, and associate the terminal information of the terminal with the multicast address in the multicast joining information into the preset correspondence.

Optionally, in S707, if the session management network element sends the session establishment request message including the multicast joining information to the multicast function network element by using the user plane network element supporting the multicast service, in S708, the multicast function network element may further obtain, as the connection information of the terminal, a session identifier of the established session or the address information allocated in a session establishment process to the connection device on the connection accessed by the terminal, and associate the connection information of the terminal with the multicast address in the multicast joining information into the preset correspondence.

Optionally, in S707, if the session management network element sends the session establishment request message including the multicast joining information to the multicast function network element by using the user plane network element supporting the multicast service, and the session establishment request further includes the address information or the identifier information allocated to the connection device on the connection accessed by the terminal, in S708, the multicast function network element may further obtain, as the connection information of the terminal, the address information or the identifier information allocated to the connection device on the connection accessed by the terminal that is included in the session establishment request, and associate the connection information of the terminal with the multicast address in the multicast joining information into the preset correspondence.

Optionally, in S707, if the session management network element sends the session establishment request message to the multicast function network element by using the user plane network element supporting the multicast service, and further sends the preset correspondence to the multicast function network element by using the user plane network element supporting the multicast service, in S708, the multicast function network element directly obtains the preset correspondence.

Specifically, in S708, a control plane network element between the multicast function network element and the terminal establishes the session between the multicast function network element and the terminal through message exchange. The process is the same as an existing session establishment process, and details are not described herein.

After the session is established, the terminal enters a data transmission phase, and performs the processes of S609 to S618. Details are not described herein again.

It should be noted that in the multicast method shown in FIG. 7, a difference from the multicast method shown in FIG. 6A and FIG. 6B or FIG. 6a-1 and FIG. 6a-2 is that the multicast indication information is the multicast joining information, and for other specific implementations, refer to the descriptions of the specific implementations in the multicast method shown in FIG. 6A and FIG. 6B or FIG. 6a-1 and FIG. 6a-2. Details are not described herein again.

The foregoing mainly describes, from a perspective of working processes of network elements in the communications network, the solutions provided in the embodiments of this application. It may be understood that to implement the foregoing methods, the network element in the communications network includes a corresponding hardware structure and/or a corresponding software module for performing the steps. Persons skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. In the embodiments of this application, the network element in the communications network may be divided into modules based on the foregoing method examples. For example, modules corresponding to the steps may be obtained through division, or two or more steps may be integrated into one processing module. The integrated module may be implemented in a form of hardware, or may be implemented in a form of a software function module.

FIG. 8 is a possible schematic structural diagram of a multicast apparatus in the foregoing embodiments. The multicast apparatus 80 may be configured to perform functions of the multicast function network element in the foregoing method embodiments. The multicast apparatus 80 may include a receiving unit 801, an obtaining unit 802, and a sending unit 803. The receiving unit 801 is configured to support the multicast apparatus 80 in performing the processes S401, S402b, S402d, and S501 in FIG. 4, FIG. 5, or FIG. 5a and the processes S610, S611, and S615 in FIG. 6B or FIG. 6a-2. The obtaining unit 802 is configured to support the multicast apparatus 80 in performing the processes S402 and S502 in FIG. 4, FIG. 5, or FIG. 5a and the processes S612 and S616 in FIG. 6B or FIG. 6a-2. The sending unit 803 is configured to support the multicast apparatus 80 in performing the processes S403 and S503 in FIG. 4, FIG. 5, or FIG. 5a and the processes S613 and S617 in FIG. 6B or FIG. 6a-2. All related content of the steps in the foregoing method embodiments may be cited in descriptions of corresponding modules, and details are not described herein again.

Further, optionally, as shown in FIG. 8, the multicast apparatus 80 may further include a processing unit 804. The processing unit 804 is configured to support the multicast apparatus 80 in performing the process S608 in FIG. 6B or FIG. 6a-2 and the process S708 in FIG. 7.

FIG. 9 is a possible schematic structural diagram of a multicast apparatus in the foregoing embodiments. The multicast apparatus 90 may be configured to perform functions of the terminal in the foregoing method embodiments. The multicast apparatus 90 may include a sending unit 9001 and a receiving unit 9002. The sending unit 9001 is configured to support the multicast apparatus 90 in performing the process S402a in FIG. 5, the processes S601 and S609 in FIG. 6A and FIG. 6B or FIG. 6a-1 and FIG. 6a-2, and the process S701 in FIG. 7. The receiving unit 9002 is configured to support the multicast apparatus 90 in performing the processes S404 and S504 in FIG. 4, FIG. 5, or FIG. 5a and the processes S614 and S618 in FIG. 6B or FIG. 6a-2. All related content of the steps in the foregoing method embodiments may be cited in function descriptions of corresponding function modules, and details are not described herein again.

FIG. 10 is a possible schematic structural diagram of a multicast apparatus in the foregoing embodiments. The multicast apparatus 100 may be configured to perform functions of the access management network element or the session management network element in the foregoing method embodiments. The multicast apparatus 100 may include a receiving unit 1001 and a processing unit 1002. The receiving unit 1001 is configured to support the multicast apparatus 100 in performing the processes S602 and S605 in FIG. 6A or FIG. 6a-1 and the processes S702 and S705 in FIG. 7. The processing unit 1002 is configured to support the multicast apparatus 100 in performing the processes S603 and S606 in FIG. 6A or FIG. 6a-1 and the processes S703 and S706 in FIG. 7. All related content of the steps in the foregoing method embodiments may be cited in function descriptions of corresponding function modules, and details are not described herein again.

Further, optionally, as shown in FIG. 10, the multicast apparatus 100 may further include a sending unit 1003. The sending unit 1003 is configured to support the multicast apparatus 100 in performing the processes S604 and S607 in FIG. 6A or FIG. 6a-1 and the processes S704 and S707 in FIG. 7.

FIG. 11 is a possible schematic structural diagram of a multicast apparatus in the foregoing embodiments. As shown in FIG. 11, the multicast apparatus 110 may include a processor 1101, a memory 1102, and a transceiver 1103. The multicast apparatus 110 may perform functions of the multicast function network element, the terminal, the access management network element, or the session management network element in the foregoing method embodiments.

The following describes the components of the multicast apparatus 110 in detail with reference to FIG. 11.

The memory 1102 may be a volatile memory (volatile memory), for example, a random access memory (random-access memory, RAM); a non-volatile memory (non-volatile memory), for example, a read-only memory (read-only memory, ROM), a flash memory (flash memory), a hard disk drive (hard disk drive, HDD), or a solid-state disk (solid-state drive, SSD); or a combination of the foregoing types of memories, and is configured to store program code and a configuration file that can implement the methods in this application.

The processor 1101 is a control center of the multicast apparatus 110, and may be a central processing unit (central processing unit, CPU), an application-specific integrated circuit (application specific integrated circuit, ASIC), or one or more integrated circuits configured to implement the embodiments of this application, for example, one or more microprocessors (digital signal processor, DSP) or one or more field programmable gate arrays (field programmable gate array, FPGA). The processor 1101 may perform various functions of the multicast apparatus 110 by running or executing a software program and/or module that is stored in the memory 1102 and invoking data stored in the memory 1102.

The transceiver 1103 is configured to support the multicast apparatus 110 in interacting with another network element. For example, the transceiver 1103 may be a transceiver circuit or a communications interface.

Optionally, when the multicast apparatus 110 performs the functions of the multicast function network element in the foregoing method embodiments, the processor 1101 runs or executes the software program and/or module that is stored in the memory 1102 and invokes the data stored in the memory 1102, to support, by using the transceiver 1103, the multicast apparatus 110 in performing the processes S401, S402b, S402d, S403, S501, and S503 in FIG. 4, FIG. 5, or FIG. 5a and the processes S610, S611, S613, S615, and S617 in FIG. 6B or FIG. 6a-2; and support the multicast apparatus 110 in performing the processes S402 and S502 in FIG. 4, FIG. 5, or FIG. 5a and the processes S612 and S616 in FIG. 6B or FIG. 6a-2.

Optionally, when the multicast apparatus 110 performs the functions of the terminal in the foregoing method embodiments, the processor 1101 runs or executes the software program and/or module that is stored in the memory 1102 and invokes the data stored in the memory 1102, to support, by using the transceiver 1103, the multicast apparatus 110 in performing the processes S402a, S404, and S504 in FIG. 5 or FIG. 5a, the processes S601, S609, S614, and S618 in FIG. 6A and FIG. 6B or FIG. 6a-1 and FIG. 6a-2, and the process S701 in FIG. 7.

Optionally, when the multicast apparatus 110 performs the functions of the access management network element in the foregoing method embodiments, the processor 1101 runs or executes the software program and/or module that is stored in the memory 1102 and invokes the data stored in the memory 1102, to support, by using the transceiver 1103, the multicast apparatus 110 in performing the process S602 in FIG. 6A or FIG. 6a-1 and the process S702 in FIG. 7, and support the multicast apparatus 110 in performing the process S603 in FIG. 6A or FIG. 6a-1 and the process S703 in FIG. 7.

Optionally, when the multicast apparatus 110 performs the functions of the session management network element in the foregoing method embodiments, the processor 1101 runs or executes the software program and/or module that is stored in the memory 1102 and invokes the data stored in the memory 1102, to support, by using the transceiver 1103, the multicast apparatus 110 in performing the process S605 in FIG. 6A or FIG. 6a-1 and the process S705 in FIG. 7, and support the multicast apparatus 110 in performing the process S606 in FIG. 6A or FIG. 6a-1 and the process S706 in FIG. 7.

As described above, the multicast function network element 80, 90, 100, or 110 provided in the embodiments of this application may be configured to implement the methods implemented in the embodiments of this application. For ease of description, only parts related to the embodiments of this application are shown. For specific technical details that are not disclosed, refer to the embodiments of this application.

According to still another aspect, an embodiment of this application provides a multicast system, including the multicast apparatus for performing functions of the multicast function network element and the multicast apparatus for performing functions of the terminal that are described in any one of the foregoing embodiments.

According to still another aspect, an embodiment of this application provides a multicast system, including the multicast apparatus for performing functions of the multicast function network element, the multicast apparatus for performing functions of the terminal, the multicast apparatus for performing functions of the access management network element, and the multicast apparatus for performing functions of the session management network element that are described in any one of the foregoing embodiments.

According to still another aspect, an embodiment of this application provides a computer storage medium, configured to store a computer software instruction used by any one of the foregoing multicast apparatuses. The computer software instruction includes a program designed for performing any one of the foregoing method embodiments.

Method or algorithm steps described in combination with the content disclosed in this application may be implemented by hardware, or may be implemented by a processor by executing a software instruction. The software instruction may include a corresponding software module. The software module may be stored in a RAM, a flash memory, a ROM, an erasable programmable read-only memory (erasable programmable rom, EPROM), an electrically erasable programmable read-only memory (electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a core network interface device. Certainly, the processor and the storage medium may alternatively exist in the core network interface device as discrete components.

It may be clearly understood by persons skilled in the art that, for the purpose of convenient and brief description, for detailed working processes of the foregoing system, apparatus, and unit, refer to corresponding processes in the foregoing method embodiments, and details are not described herein again.

Persons skilled in the art should be aware that in the foregoing one or more examples, functions described in this application may be implemented by hardware, software, firmware, or any combination thereof. When the functions are implemented by software, the functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or special-purpose computer. It may be clearly understood by persons skilled in the art that, for the purpose of convenient and brief description, for the detailed working processes of the foregoing system, apparatus, and unit, refer to the corresponding processes in the foregoing method embodiments, and details are not described herein again.

In the several embodiments provided in this application, it should be understood that the disclosed system, apparatus, and method may be implemented in other manners. For example, the apparatus embodiments described above are merely examples. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, a network device, or the like) to perform some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

## Claims

1. A multicast method applied in a wireless network, comprising:
receiving (S607), by a multicast function network element (2034) deployed in a user plane network element (2033) of a core network (203) of the wireless network, a session establishment request message from a session management network element, wherein the session establishment request message comprises multicast indication information and an address of a terminal, the multicast indication information instructs to establish a session for a multicast service;
establishing (S608), by the multicast function network element, the session with the terminal according to the session establishment request message;
obtaining (S608), by the multicast function network element (2034), identifier information of the session allocated by the session management network element (2032);
receiving (S609, S610), by the multicast function network element (2034) from the terminal (201), multicast joining information through a user plane, wherein the multicast joining information comprises a multicast address corresponding to a multicast group;
establishing, by the multicast function network element (2034), a correspondence between the identifier information of the session and the multicast address, wherein the identifier information of the session uniquely corresponds to the terminal;
receiving (S611), by the multicast function network element (2034), multicast data from a multicast source (204), wherein the multicast data comprises the multicast address;
obtaining (S612), by the multicast function network element (2034) based on the established correspondence, the identifier information of the session corresponding to the multicast address;
modifying, by the multicast function network element (2034), a destination address of the multicast data to the address of the terminal; and
sending (S613), by the multicast function network element (2034), the multicast data to the terminal through the session.

2. The multicast method according to claim 1, further comprising:
receiving (S601-S607), by the session management network element (2032) from the terminal (201) through an access management network element (2031), a session establishment request, wherein the session establishment request comprises the multicast indication information.

3. The multicast method according to claim 2, wherein the multicast indication information comprises a data network name.

4. A multicast apparatus deployed in a user plane network element (2033) of a core network (203) in a wireless network, comprising:
a receiving unit (801), configured to receive a session establishment request message from a session management network element, to receive through a user plane multicast joining information from a terminal (201) and to receive multicast data from a multicast source (204), wherein the session establishment request message comprises multicast indication information and an address of the terminal, the multicast indication information instructs to establish a session for a multicast service, the multicast joining information comprises a multicast address corresponding to a multicast group, and the multicast data comprises the multicast address;
a processing unit (804), configured to establish the session with the terminal (201) according to the session establishment request message, to obtain identifier information of the session allocated by the session management network element (2032), to establish a correspondence between the identifier information of the session and the multicast address, to obtain, based on the established correspondence, the identifier information of the session corresponding to the multicast address, and to modify a destination address of the multicast data to the address of the terminal, wherein the identifier information of the session uniquely corresponds to the terminal; and
a sending unit (803), configured to send the multicast data to the terminal (201) through the session;
wherein the multicast apparatus is a multicast function network element.

5. The multicast apparatus according to claim 4, wherein the multicast indication information comprises a data network name.

6. A computer readable storage medium, wherein the computer readable storage medium stores an instruction, and when the instruction runs on a computer, the computer is enabled to perform the method according to claim 1.

7. A system, comprising:
a multicast apparatus deployed in a user plane network element (2033) of a core network (203), configured to carry out the method in claim 1; and
an access network device (2021), configured to receive multicast joining information from a terminal (201) and to send the multicast joining information to the multicast apparatus.

## Patentansprüche

1. Multicast-Verfahren, das in einem Drahtlosnetzwerk angewendet wird, umfassend:
Empfangen (S607), durch ein Multicastfunktions-Netzwerkelement (2034), das in einem Benutzerebenen-Netzwerkelement (2033) eines Kernnetzwerks (203) des Drahtlosnetzwerks bereitgestellt ist, einer Sitzungsherstellungsanforderungsnachricht von einem Sitzungsmanagement-Netzwerkelement, wobei die Sitzungsherstellungsanforderungsnachricht Multicast-Anzeigeinformationen und eine Adresse eines Endgeräts umfasst, wobei die Multicast-Anzeigeinformationen anweisen, eine Sitzung für einen Multicast-Dienst herzustellen;
Herstellen (S608), durch das Multicastfunktions-Netzwerkelement, der Sitzung mit dem Endgerät gemäß der Sitzungsherstellungsanforderungsnachricht;
Erhalten (S608), durch das Multicastfunktions-Netzwerkelement (2034), von Kennungsinformationen der Sitzung, die durch das Sitzungsmanagement-Netzwerkelement (2032) zugewiesen wurden;
Empfangen (S609, S610), durch das Multicastfunktions-Netzwerkelement (2034) von dem Endgerät (201), von Multicast-Beitrittsinformationen über eine Benutzerebene, wobei die Multicast-Beitrittsinformationen eine Multicast-Adresse umfassen, die einer Multicast-Gruppe entspricht;
Herstellen, durch das Multicastfunktions-Netzwerkelement (2034), einer Entsprechung zwischen den Kennungsinformationen der Sitzung und der Multicast-Adresse, wobei die Kennungsinformationen der Sitzung eindeutig dem Endgerät entsprechen;
Empfangen (S611), durch das Multicastfunktions-Netzwerkelement (2034), von Multicast-Daten von einer Multicast-Quelle (204), wobei die Multicast-Daten die Multicast-Adresse umfassen;
Erhalten (S612), durch das Multicastfunktions-Netzwerkelement (2034) basierend auf der hergestellten Entsprechung, der Kennungsinformationen der Sitzung, die der Multicast-Adresse entsprechen;
Ändern, durch das Multicastfunktions-Netzwerkelement (2034), einer Zieladresse der Multicast-Daten auf die Adresse des Endgeräts; und
Senden (S613), durch das Multicastfunktions-Netzwerkelement (2034), der Multicast-Daten an das Endgerät über die Sitzung.

2. Multicast-Verfahren nach Anspruch 1, ferner umfassend:
Empfangen (S601-S607), durch das Sitzungsmanagement-Netzwerkelement (2032) von dem Endgerät (201) über ein Zugangsmanagement-Netzwerkelement (2031), einer Sitzungsherstellungsanforderung, wobei die Sitzungsherstellungsanforderung die Multicast-Anzeigeinformationen umfasst.

3. Multicast-Verfahren nach Anspruch 2, wobei die Multicast-Anzeigeinformationen einen Datennetzwerknamen umfassen.

4. Multicast-Einrichtung, die in einem Benutzerebenen-Netzwerkelement (2033) eines Kernnetzwerks (203) in einem Drahtlosnetzwerk bereitgestellt ist, umfassend:
eine Empfangseinheit (801), die dazu konfiguriert ist, eine Sitzungsherstellungsanforderungsnachricht von einem Sitzungsmanagement-Netzwerkelement zu empfangen, über eine Benutzerebene Multicast-Beitrittsinformationen von einem Endgerät (201) zu empfangen und Multicast-Daten von einer Multicast-Quelle (204) zu empfangen, wobei die Sitzungsherstellungsanforderungsnachricht Multicast-Anzeigeinformationen und eine Adresse des Endgeräts umfasst, wobei die Multicast-Anzeigeinformationen anweisen, eine Sitzung für einen Multicast-Dienst herzustellen, wobei die Multicast-Beitrittsinformationen eine Multicast-Adresse umfassen, die einer Multicast-Gruppe entspricht, und die Multicast-Daten die Multicast-Adresse umfassen;
eine Verarbeitungseinheit (804), die dazu konfiguriert ist, die Sitzung mit dem Endgerät (201) gemäß der Sitzungsherstellungsanforderungsnachricht herzustellen, Kennungsinformationen der Sitzung zu erhalten, die durch das Sitzungsmanagement-Netzwerkelement (2032) zugewiesen wurden, eine Entsprechung zwischen den Kennungsinformationen der Sitzung und der Multicast-Adresse herzustellen, basierend auf der hergestellten Entsprechung die Kennungsinformationen der Sitzung zu erhalten, die der Multicast-Adresse entsprechen, und eine Zieladresse der Multicast-Daten auf die Adresse des Endgeräts zu ändern, wobei die Kennungsinformationen der Sitzung eindeutig dem Endgerät entsprechen; und
eine Sendeeinheit (803), die dazu konfiguriert ist, die Multicast-Daten an das Endgerät (201) über die Sitzung zu senden;
wobei die Multicast-Einrichtung ein Multicastfunktions-Netzwerkelement ist.

5. Multicast-Einrichtung nach Anspruch 4, wobei die Multicast-Anzeigeinformationen einen Datennetzwerknamen umfassen.

6. Computerlesbares Speichermedium, wobei das computerlesbare Speichermedium eine Anweisung speichert, und wenn die Anweisung auf einem Computer ausgeführt wird, dem Computer ermöglicht wird, das Verfahren nach Anspruch 1 durchzuführen.

7. System, umfassend:
eine Multicast-Einrichtung, die in einem Benutzerebenen-Netzwerkelement (2033) eines Kernnetzwerks (203) bereitgestellt ist, die dazu konfiguriert ist, das Verfahren nach Anspruch 1 auszuführen; und
eine Zugangsnetzwerkvorrichtung (2021), die dazu konfiguriert ist, Multicast-Beitrittsinformationen von einem Endgerät (201) zu empfangen und die Multicast-Beitrittsinformationen an die Multicast-Einrichtung zu senden.

## Revendications

1. Procédé de multidiffusion appliqué dans un réseau sans fil, comprenant :
la réception (S607), par un élément de réseau à fonction multidiffusion (2034) déployé dans un élément de réseau de plan utilisateur (2033) d'un réseau central (203) du réseau sans fil, d'un message de demande d'établissement de session en provenance d'un élément de réseau de gestion de session, le message de demande d'établissement de session comprenant des informations d'indication de multidiffusion et une adresse d'un terminal, les informations d'indication de multidiffusion ordonnant d'établir une session pour un service de multidiffusion ;
l'établissement (S608), par l'élément de réseau à fonction multidiffusion, de la session avec le terminal conformément au message de demande d'établissement de session ;
l'obtention (S608), par l'élément de réseau à fonction multidiffusion (2034), des informations d'identifiant de la session attribuées par l'élément de réseau de gestion de session (2032) ;
la réception (S609, S610), par l'élément de réseau à fonction multidiffusion (2034) depuis le terminal (201), d'informations de jonction multidiffusion via un plan utilisateur, dans lequel les informations de jonction multidiffusion comprennent une adresse multidiffusion correspondant à un groupe multidiffusion ;
l'établissement, par l'élément de réseau à fonction de multidiffusion (2034), d'une correspondance entre les informations d'identifiant de la session et l'adresse de multidiffusion, les informations d'identifiant de la session correspondant uniquement au terminal ;
la réception (S611), par l'élément de réseau à fonction de multidiffusion (2034), de données de multidiffusion provenant d'une source de multidiffusion (204), les données de multidiffusion comprenant l'adresse de multidiffusion ;
l'obtention (S612), par l'élément de réseau à fonction multidiffusion (2034) sur la base de la correspondance établie, des informations d'identifiant de la session correspondant à l'adresse multidiffusion ;
la modification, par l'élément de réseau à fonction multidiffusion (2034), d'une adresse de destination des données multidiffusion à l'adresse du terminal ; et
l'envoi (S613), par l'élément de réseau à fonction multidiffusion (2034), des données multidiffusion au terminal via la session.

2. Procédé de multidiffusion selon la revendication 1, comprenant en outre :
la réception (S601-S607), par l'élément de réseau de gestion de session (2032) du terminal (201) par l'intermédiaire d'un élément de réseau de gestion d'accès (2031), d'une demande d'établissement de session, la demande d'établissement de session comprenant les informations d'indication de multidiffusion.

3. Procédé de multidiffusion selon la revendication 2, dans lequel les informations d'indication de multidiffusion comprennent un nom de réseau de données.

4. Appareil de multidiffusion déployé dans un élément de réseau de plan utilisateur (2033) d'un réseau central (203) dans un réseau sans fil, comprenant :
une unité de réception (801), configurée pour recevoir un message de demande d'établissement de session en provenance d'un élément de réseau de gestion de session, pour recevoir par l'intermédiaire d'un plan utilisateur des informations d'adhésion multidiffusion en provenance d'un terminal (201) et pour recevoir des données multidiffusion en provenance d'une source multidiffusion (204), le message de demande d'établissement de session comprenant des informations d'indication de multidiffusion et une adresse du terminal, les informations d'indication de multidiffusion ordonnant d'établir une session pour un service de multidiffusion, les informations de jonction de multidiffusion comprenant une adresse de multidiffusion correspondant à un groupe de multidiffusion, et les données de multidiffusion comprenant l'adresse de multidiffusion ;
une unité de traitement (804), configurée pour établir la session avec le terminal (201) selon le message de demande d'établissement de session, pour obtenir des informations d'identifiant de la session allouées par l'élément de réseau de gestion de session (2032), pour établir une correspondance entre les informations d'identifiant de la session et l'adresse multidiffusion, pour obtenir, sur la base de la correspondance établie, les informations d'identifiant de la session correspondant à l'adresse multidiffusion, et pour modifier une adresse de destination des données multidiffusion à l'adresse du terminal, les informations d'identification de la session correspondant uniquement au terminal ; et
une unité d'envoi (803), configurée pour envoyer les données de multidiffusion au terminal (201) via la session ;
l'appareil de multidiffusion étant un élément de réseau à fonction de multidiffusion.

5. Appareil de multidiffusion selon la revendication 4, dans lequel les informations d'indication de multidiffusion comprennent un nom de réseau de données.

6. Support de stockage lisible par ordinateur, dans lequel le support de stockage lisible par ordinateur stocke une instruction, et lorsque l'instruction s'exécute sur un ordinateur, l'ordinateur est activé pour mettre en oeuvre le procédé selon la revendication 1.

7. Système, comprenant :
un appareil de multidiffusion déployé dans un élément de réseau de plan utilisateur (2033) d'un réseau central (203), configuré pour mettre en oeuvre le procédé selon la revendication 1 ; et
un dispositif de réseau d'accès (2021), configuré pour recevoir des informations de connexion multidiffusion à partir d'un terminal (201) et pour envoyer les informations de connexion multidiffusion à l'appareil multidiffusion.
